# EUROPEAN PATENT SPECIFICATION

(11) **EP 4 386 563 B1**
(45) Date of publication and mention of the grant of the patent: **28.01.2026**
(21) Application number: 21953559.8
(22) Date of filing: 16.11.2021
(51) Int. Cl.: G06F 12/02, G06F 3/06

(54) **METHOD FOR DATA CLASSIFICATION BY LIFESPAN ACCORDING TO DATA TRANSFER FREQUENCY FOR IMPROVING PERFORMANCE AND LIFESPAN OF FLASH MEMORY-BASED SSD**
VERFAHREN ZUR DATENKLASSIFIZIERUNG NACH LEBENSDAUER GEMÄSS DER DATENTRANSFERFREQUENZ ZUR VERBESSERUNG DER LEISTUNG UND LEBENSDAUER VON SSD AUF FLASH-SPEICHERBASIS
PROCÉDÉ DE CLASSIFICATION DE DONNÉES PAR DURÉE DE VIE EN FONCTION DE LA FRÉQUENCE DE TRANSFERT DE DONNÉES POUR AMÉLIORER LES PERFORMANCES ET LA DURÉE DE VIE D'UN SSD À MÉMOIRE FLASH

(30) Priority: 13.08.2021 KR 20210107014
(43) Date of publication of application: 19.06.2024
(73) Proprietor: Ulsan National Institute of Science and Technology, Ulju-gun, Ulsan 44919 (KR)
(72) Inventor: NOH, Sam Hyuk, Ulju-gun Ulsan 44919 (KR); LEE, Eun Jae, Ulju-gun Ulsan 44919 (KR); PARK, Hyun Seung, Ulju-gun Ulsan 44919 (KR); KIM, Jae Ho, Jinju-si Gyeongsangnam-do 52828 (KR)
(74) Representative: Gulde & Partner
(86) International application number: PCT/KR2021/016802
(87) International publication number: WO 2023/017914

(56) References cited:
- KR-A- 20120 131 579
- KR-A- 20190 094 098
- KR-A- 20200 057 473
- KR-B1- 101 880 190
- US-A1- 2017 168 929
- US-A1- 2021 240 632

## Description

### TECHNICAL FIELD

The present disclosure relates to a data classification method by lifespan according to a data transfer frequency for improving the performance and lifespan of a flash memory-based solid-state drive (SSD), and more particularly, to a data classification method by lifespan according to a data transfer frequency for improving the performance and lifespan of a flash memory-based SSD in which data is classified by lifespan based on a transfer frequency at which a plurality of pages on which the data is written are transferred from a certain block to another block by garbage collections (GCs) from an initial creation time to an invalidation time.

### BACKGROUND ART

A solid-state drive (SSD) is a storage device configured with multiple NAND flash memories coupled in parallel. Unlike a hard disk drive (HDD) that operates mechanically, the SSD that operates on a semiconductor basis has improved performance in terms of data transfer speed and random input/output and has lowered power consumption, and in recent years, its utilization rate as a storage device for servers, desktops, and laptops is gradually increasing.

Due to the critical characteristics of a NAND flash memory constituting the SSD, each cell has a limit on the number of write/erase cycles and cannot be overwritten in place. A single-level cell (SLC) has a limited number of about 100,000 cycles, a multi-level cell (MLC) has a limited number of about 10,000 cycles, and a triple-level cell (TLC) has a limited number of about 1,000 cycles. If the limited number of cycles is exceeded, the cell does not operate normally. Additionally, unlike the HDD, the NAND flash memory cannot be overwritten in place, and thus a write operation is only allowed on an empty page.

Valid data and invalid data in an SSD are generated during a write/erase operation on the SSD. Valid data is generated through a write operation when input data is stored in the SSD, and invalid data occurs by updating and erasing valid data. Invalid data is maintained until it is completely erased when garbage collections (GCs) occur, and after the garbage collection process, a space occupied by invalid data becomes an empty space.

Here, garbage collections (GCs) are a process of performing an erase operation on invalid data in a block on the NAND flash memory to produce an empty block. An operation of garbage collections (GCs) compensates for the SSD's inability to overwrite in place, but slow the SSD's input/output (I/O) speed due to a slow erase operation.

In recent years, studies on a hot/cold or semantic classification method to solve garbage collections (GCs) so as to improve the performance of the SSD have been carried out, but the classification method has a limitation that requires an additional data structure or an interface modification for data classification. Therefore, there is a need for a technology that can solve the problem of garbage collections (GCs) through classifying data with no additional memory consumption or designated interface.

US 2017/168929 A1 relates to a memory system including a nonvolatile memory including a plurality of memory blocks, and a controller electrically connected to the nonvolatile memory.

### DISCLOSURE OF INVENTION

### TECHNICAL PROBLEM

The present disclosure is contrived to solve the foregoing problems, and an aspect of the present disclosure is to provide a data classification method by lifespan according to a data transfer frequency for improving the performance and lifespan of a flash memory-based SSD in which data is classified by lifespan based on a transfer frequency at which a plurality of pages on which the data is written are transferred from a certain block to another block by garbage collections (GCs) from an initial creation time to an invalidation time, thereby enhancing a speed of an erase operation of the garbage collections (GCs) as well as enhancing an input/output (I/O) speed of the SSD so as to improve the performance of the SSD.

Furthermore, the present disclosure is to provide a data classification method by lifespan according to a data transfer frequency for improving the performance and lifespan of a flash memory-based SSD in which the transfer frequency is stored in an out-of-band (OOB) unit, which is an additional space provided on one side of a plurality of pages, while at the same time transferring the plurality of pages from a certain block to another block by garbage collections (GCs) so as to allow implementation at a software level of the SSD with no additional memory consumption or designated interface.

### TECHNICAL SOLUTION

In order to achieve the foregoing objectives, there is provided a data classification method by lifespan according to a data transfer frequency for improving the performance and lifespan of a flash memory-based solid-state drive (SSD), the method including: a transfer frequency tracking step of tracking, by software installed in a computer system, a transfer frequency at which a plurality of pages on which data is written are transferred from a certain block to another block by garbage collections (GCs), respectively, from an initial creation time to an invalidation time at which the data is erased or overwritten in the flash memory-based SSD, wherein the transfer frequency is stored in an out-of-band unit, which is an additional space provided on one side of a plurality of pages, while at the same time transferring the plurality of pages from a certain block to another block by garbage collections; and a classification group formation step of grouping, by the software, one or more pages having the same transfer frequency from among the plurality of pages into one or more blocks to form a classification group.

### ADVANTAGEOUS EFFECTS

As described above, according to the present disclosure, data may be classified by lifespan based on a transfer frequency at which a plurality of pages on which the data is written are transferred from a certain block to another block by garbage collections (GCs) from an initial creation time to an invalidation time, thereby erasing a block including pages on which data other than cold data is written without using a separate copy process. Accordingly, a speed of an erase operation of the garbage collections (GCs) may be enhanced, and an input/output (I/O) speed of the SSD may be enhanced as well, thereby having an effect of improving the performance of the SSD.

In addition, according to the present disclosure, the transfer frequency is stored in an out-of-band (OOB) unit, which is an additional space provided on one side of a plurality of pages, while at the same time transferring the plurality of pages from a certain block to another block by garbage collections (GCs), thereby having an effect of allowing implementation at a software level of the SSD with no additional memory consumption or designated interface.

### BRIEF DESCRIPTION OF THE DRAWINGS

FIG. 1 is a flowchart showing a data classification method by lifespan according to a transfer frequency for improving the performance and lifespan of a flash memory-based SSD of the present disclosure.
FIG. 2 is a diagram showing conventional garbage collections (GCs).
FIG. 3 is a diagram showing a case (a) where conventional data is not classified and a case (b) where data is classified by lifespan according to a transfer frequency according to an embodiment of the present disclosure.
FIG. 4 is a diagram showing a classification group formation step according to an embodiment of the present disclosure.

### BEST MODE FOR CARRYING OUT THE INVENTION

Although the terms used herein are selected from generally known and used terms considering their functions in the present disclosure, the terms may be modified depending on intention of a person skilled in the art, practices, or the advent of new technology. Besides, in a specific case, some terms may be arbitrarily chosen by the present applicant, and in this case, the meanings of those terms will be described in corresponding parts of the present disclosure in detail. Accordingly, the terms used herein should be understood not simply by the actual terms used but by the meaning lying within and the description disclosed herein.

Unless defined otherwise, the terms used herein including technological or scientific terms have the same meaning that is generally understood by those skilled in the art to which the present disclosure pertains. The terms used herein shall not be interpreted not only based on the definition of any dictionary but also the meaning that is used phase the field to which the invention pertains, and shall not be interpreted too ideally or formally unless clearly defined herein.

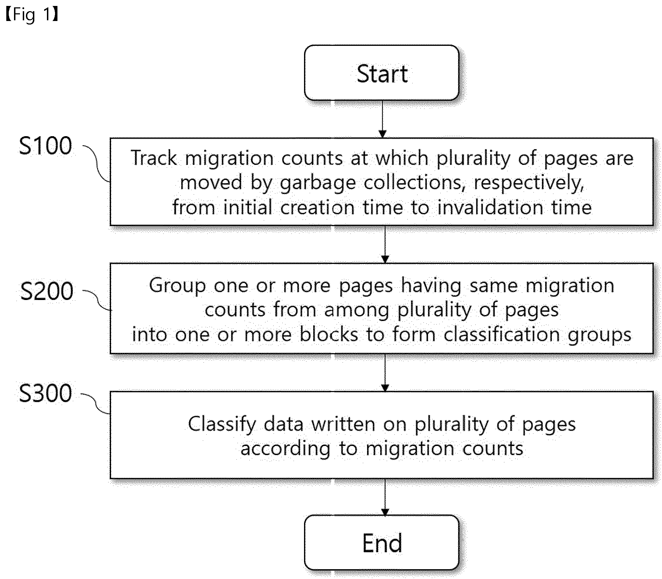

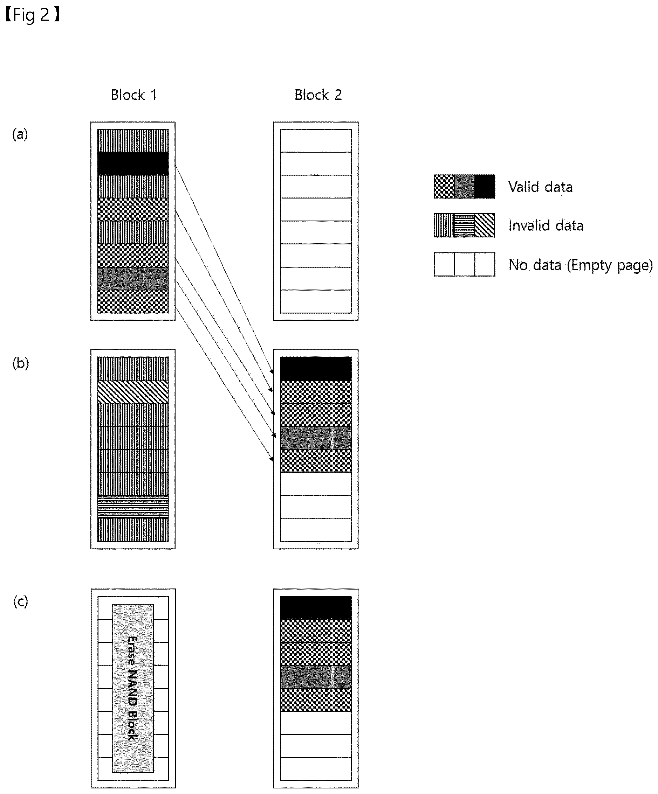

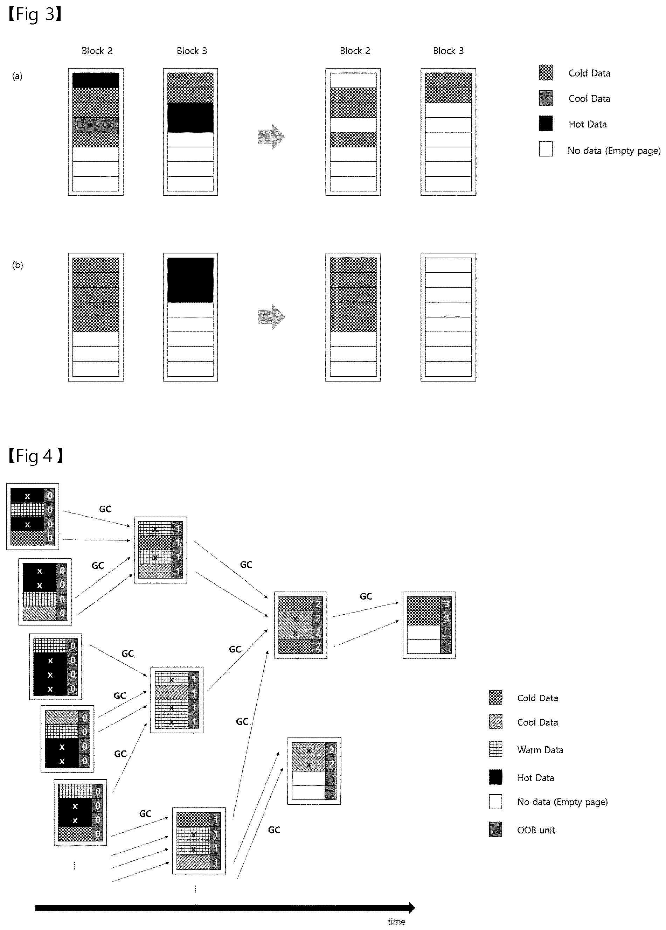

Hereinafter, an embodiment according to the present disclosure will be described in detail with reference to the accompanying drawings. FIG. 1 is a flowchart showing a data classification method by lifespan according to a transfer frequency for improving the performance and lifespan of a flash memory-based SSD 100 of the present disclosure. FIG. 2 is a diagram showing conventional garbage collections (GCs). FIG. 3 is a diagram showing a case (a) where conventional data is not classified and a case (b) where data is classified by lifespan according to a transfer frequency according to an embodiment of the present disclosure. FIG. 4 is a diagram showing a classification group formation step S200 according to an embodiment of the present disclosure.

In general, a flash memory may include a block including a plurality of pages, a plane including a plurality of blocks, and a die including a plurality of planes. Furthermore, in the flash memory, read and write commands may be performed in units of pages, while data erasure may only be performed in units of blocks having higher units than those of pages.

Additionally, garbage collections (GCs) are generally a process of transferring pages including internal valid data within a block to another block prior to erasing the block. More specifically, referring to (a) of FIG. 2, invalid data, which is data that has already been invalidated by using garbage collections (GCs), and valid data that has not yet been invalidated are written together in block 1. Block 2 includes empty pages with no data.

Here, referring to (b) of FIG. 2, only the valid data is copied to block 2, and the valid data that has been copied in block 1 is invalidated. Furthermore, referring to (c) of FIG. 2, since block 1 includes only invalid data, block 1 is erased in units of blocks so as to be reused.

However, for conventional garbage collections (GCs), in block 2 consisting of only valid data, hot data that is most easily invalidated, that is, updated more frequently, cool data that is more easily invalidated than the cold data, and cool data that is least easily invalidated are written together without being classified.

More specifically, in blocks 2 and 3 shown in (a) of FIG. 3, hot data, cool data, and cold data indicated by temperature are written together without being classified according to a degree of ease of invalidation, and both hot data and cool data are invalidated, and then cold data is distributed and written in blocks 2 and 3, respectively.

In other words, in order to recycle the blocks, a process of copying and merging the distributed cold data into either one of blocks 2 and 3 must be added. Accordingly, conventional garbage collections (GCs) continue to copy data unnecessarily to slow down the erase operation and also slow down the input/output (I/O) speed of the SSD, and thus there is a limit in improving the performance of the SSD.

However, in the present disclosure, through the transfer frequency tracking step S100 and the classification group formation step S200, as a result, as shown in (b) of FIG. 3, block 2 consisting only of pages including cold data that is least easily invalidated is formed, and block 3 may be immediately erased for block recycling without going through a separate valid data copy process. Therefore, a speed of an erase operation of the garbage collections (GCs) may be enhanced, and an input/output (I/O) speed of the SSD 100 may be enhanced as well, thereby having a significant effect in improving the performance of the SSD 100.

In implementing this, first, referring to FIG. 1, a method of classifying data by lifespan according to a transfer frequency for improving the performance and lifespan of the flash memory-based SSD 100 of the present disclosure includes a transfer frequency tracking step S100 and a classification group formation step S200.

The present disclosure may be implemented as firmware or as software within an operating system depending on a configuration of managing the flash memory.

More specifically, in the transfer frequency tracking step S100, a transfer frequency at which a plurality of pages on which data is written are transferred from a certain block to another block by garbage collections (GCs), respectively, from an initial creation time to an invalidation time at which the data is erased or overwritten in the flash memory-based solid-state drive (SSD) 100 is tracked by software 210 installed in a computer system 200.

Here, the transfer frequency is stored in an out-of-band (OOB) unit 110, which is an additional space provided on one side of a plurality of pages, while at the same time transferring the plurality of pages from a certain block to another block by garbage collections (GCs).

That is, the transfer frequency is 0 at the initial creation time, and a numerical value of the transfer frequency incremented by 1 may be stored whenever a plurality of pages are transferred from a certain block to another block by garbage collections (GCs). For example, referring to FIG. 4, the OOB unit 110, which is an additional space provided on one side of each of the plurality of pages, is shown in gray color. Furthermore, whenever a plurality of pages are transferred from a certain block to another block by garbage collections (GCs), it can be seen that a numerical value incremented by 1, such as 0, 1, 2, and 3, is stored.

Next, in the classification group formation step S200, one or more pages having the same transfer frequency from among the plurality of pages are grouped, by the software 210, into one or more blocks to form a classification group.

That is, when one or more pages having the same transfer frequency from among a plurality of pages are grouped by a number of pages that can be accommodated in one block, the remaining pages are also grouped by a number of pages that can be accommodated in another block. Accordingly, one or more blocks having the same transfer frequency may be formed into a classification group.

For example, as shown in FIG. 4, there may be 20 or more pages having the transfer frequency of 0, and a plurality of blocks may accommodate only 4 pages. Therefore, in the classification group formation step S200, 4 pages having the transfer frequency of 0 may be grouped into one block, and 5 or more such blocks may be formed. Furthermore, 5 or more blocks each including 4 pages having the transfer frequency of 0 may be formed as 'classification group 0'. Additionally, in the classification group formation step S200, 4 pages having the transfer frequency of 1 may be grouped into one block, and 3 or more such blocks may be formed. Furthermore, 3 or more blocks each including 4 pages having the transfer frequency of 1 may be formed as 'classification group 1'.

In addition, in the classification group formation step S200, 6 pages having the transfer frequency of 2 may be grouped into blocks with 4 and 2 pages, respectively, and 2 blocks including the pages may be formed. Furthermore, 2 blocks each including pages having the transfer frequency of 2 may be formed as 'classification group 2'. Finally, in the classification group formation step S200, 2 pages having the transfer frequency of 3 may be grouped into one block, and 1 such block may be formed. Furthermore,1 block including pages having the transfer frequency of 3 may be formed as 'classification group 3'.

Here, in the classification group formation step (S200), when the OOB unit 110 is based on n-bit units, 2n classification groups may be formed, and the data written on the one or more pages having a transfer frequency above 2n-1 may be classified as cold data that is least easily invalidated. Here, n is a positive integer.

For example, when the OOB unit 110 is based on a 2-bit unit, 4 classification groups, which are classification group 0, classification group 1, classification group 2, and classification group 3 as mentioned above, may be formed. Furthermore, each classification group may have the transfer frequency 0, 1, 2, and 3 in that order. Furthermore, in the classification group formation step S200, data written on one or more pages in a block included in the classification group 3 having the transfer frequency above 3 may be classified as cold data that is least easily invalidated.

Next, the present disclosure may further include a data classification step S300 of classifying, by the software 210, data written on the plurality of pages according to the transfer frequency.

That is, in the data classification step S300, data written on one or more pages, which are formed as 'category group 0' from the classification group formation step S200 and have the transfer frequency of 0, may be classified as hot data that is most easily invalidated. Furthermore, data written on one or more pages, which are formed as 'classification group 1' and have the transfer frequency of 1, may be classified as warm data that is less easily invalidated than the hot data. Furthermore, data written on one or more pages, which are formed as 'classification group 2' and have the transfer frequency of 2, may be classified as cool data that is less easily invalidated than the warm data.

However, since the above-mentioned classification group is written based on 2 bits, data may be classified by comparing 4 data lifespans to temperature ranges according to the transfer frequency, and furthermore, when the OOB unit 110 is written based on 3 bits or more, the data may be further classified into 8 or more data lifespans with temperature ranges, and thus the classification groups are not limited to specific temperature ranges.

Here, data lifespan refers to an amount of data written from an initial creation time to an invalidation time at which the data is erased or overwritten in the flash memory-based solid-state drive (SSD) 100. That is, the shorter the lifespan, the closer the data is to the hot data, and the data may be easily invalidated, but the longer the lifespan, the closer the data is to the cold data, and the data may not be easily invalidated.

Therefore, as shown above in (b) of FIG. 3, according to the present disclosure, a plurality of data may be classified into a block including only cold data that is least easily invalidated and a block not including cold data. Furthermore, in the present disclosure, a block including data other than cold data is erased without a separate copy process, and only the cold data is written as valid data, thereby having a significant effect capable of erasing a block having empty pages without going through a separate copy process.

In addition, in the present disclosure, the transfer frequency may be stored in the OOB unit 100, which is an additional space provided on one side of a plurality of pages, while at the same time transferring the plurality of pages from a certain block to another block by garbage collections (GCs), thereby having a significant effect of allowing implementation at a software level of the SSD 100 with no additional memory consumption or designated interface as well as solving a problem of slowing down an erase operation speed in garbage collections (GCs) through classifying data as described above.

As described above, though the embodiments have been described with limited embodiments and drawings, those skilled in the art may make various modifications and variations from the above description. For example, although the above-described techniques are performed in a different order from that of the above-described method, and/or the above-described components, such as a system, a structure, a device, and circuit, are coupled or combined in a different form from that of the above-described method, or replaced or substituted with other components, proper results may be achieved.

Therefore, other implementations and other embodiments to the claims are within the scope of the present disclosure as defined by the appended claims.

## Claims

1. A data classification method by lifespan according to a data transfer frequency for improving the performance and lifespan of a flash memory-based solid-state drive (SSD), the method comprising:
a transfer frequency tracking step of tracking, by software installed in a computer system, a transfer frequency at which a plurality of pages on which data is written are transferred from a certain block (Block 1) to another block (Block 2, Block 3) by garbage collections (GCs), respectively, from an initial creation time to an invalidation time at which the data is erased or overwritten in the flash memory-based SSD; and
a classification group formation step of grouping, by the software, one or more pages having the same transfer frequency from among the plurality of pages into one or more blocks (Block 1, Block 2, Block 3) to form a classification group;
**characterized in that**
the transfer frequency is stored in an out-of-band (OOB) unit, which is an additional space provided on one side of a plurality of pages, while at the same time transferring the plurality of pages from a certain block (Block 1) to another block (Block 2, Block 3) by garbage collections (GCs).

2. The method of claim 1, wherein in the classification group formation step, when the OOB unit is based on n-bit units, 2n classification groups can be formed, and the data written on the one or more pages having a transfer frequency above 2n-1 is classified as cold data that is least easily invalidated, and
wherein n is a positive integer.

3. The method of claim 1 or 2, further comprising:
a data classification step of classifying, by the software, data written on the plurality of pages according to the transfer frequency.

4. The method of claim 3, wherein the transfer frequency is 0 at the initial creation time, and is incremented by 1 whenever a certain block (Block 1) is transferred to another block (Block 2, Block 3) by garbage collections (GCs), and
wherein in the data classification step, data written on one or more pages having the transfer frequency of 0 is classified as hot data that is most easily invalidated, and data written on one or more pages having the highest transfer frequency is classified as cold data that is least easily invalidated.

## Patentansprüche

1. Verfahren zur Datenklassifizierung nach Lebensdauer entsprechend einer Datenübertragungsfrequenz zur Verbesserung der Leistung und Lebensdauer eines Flash-Speicher-basierten Solid-State-Laufwerks (SSD), wobei das Verfahren Folgendes umfasst:
einen Schritt zum Verfolgen der Übertragungsfrequenz, bei dem mittels einer in einem Computersystem installierten Software eine Übertragungsfrequenz verfolgt wird, mit der mehrere Seiten, auf denen Daten geschrieben sind, von einem bestimmten Block (Block 1) zu einem anderen Block (Block 2, Block 3) durch Garbage Collections (GCs) übertragen werden, und zwar von einem anfänglichen Erstellungszeitpunkt bis zu einem Ungültigkeitszeitpunkt, zu dem die Daten in dem Flash-Speicher-basierten SSD gelöscht oder überschrieben werden; und
einen Klassifizierungsgruppenbildungsschritt, bei dem durch die Software eine oder mehrere Seiten mit derselben Übertragungsfrequenz aus den mehreren Seiten in einen oder mehrere Blöcke (Block 1, Block 2, Block 3) gruppiert werden, um eine Klassifizierungsgruppe zu bilden;
**dadurch gekennzeichnet, dass**
die Übertragungsfrequenz in einer Out-of-Band (OOB)-Einheit gespeichert wird, bei der es sich um einen zusätzlichen Speicherplatz handelt, der auf einer Seite mehrerer Seiten bereitgestellt wird, während gleichzeitig die mehreren Seiten durch Garbage Collections (GCs) von einem bestimmten Block (Block 1) in einen anderen Block (Block 2, Block 3) übertragen werden.

2. Verfahren nach Anspruch 1, wobei in dem Klassifizierungsgruppenbildungsschritt, wenn die OOB-Einheit auf n-Bit-Einheiten basiert, 2n Klassifizierungsgruppen gebildet werden können und die Daten, die auf die eine oder die mehreren Seiten mit einer Übertragungsfrequenz über 2n-1 geschrieben sind, als kalte Daten klassifiziert werden, die am wenigsten leicht ungültig werden, und
wobei n eine positive ganze Zahl ist.

3. Verfahren nach Anspruch 1 oder 2, umfassend ferner:
einen Datenklassifizierungsschritt, bei dem die auf die mehreren Seiten geschriebenen Daten durch die Software entsprechend der Übertragungsfrequenz klassifiziert werden.

4. Verfahren nach Anspruch 3, wobei die Übertragungsfrequenz zu dem anfänglichen Erstellungszeitpunkt 0 beträgt und jedes Mal um 1 erhöht wird, wenn ein bestimmter Block (Block 1) durch Garbage Collections (GCs) in einen anderen Block (Block 2, Block 3) übertragen wird, und
wobei in dem Datenklassifizierungsschritt Daten, die auf einer oder mehreren Seiten mit der Übertragungsfrequenz 0 geschrieben sind, als heiße Daten klassifiziert werden, die am leichtesten ungültig werden, während Daten, die auf einer oder mehreren Seiten mit der höchsten Übertragungsfrequenz geschrieben sind, als kalte Daten klassifiziert werden, die am wenigsten leicht ungültig werden.

## Revendications

1. Procédé de classification de données par durée de vie en fonction d'une fréquence de transfert de données pour améliorer des performances et une durée de vie d'un disque SSD (Solid-State Drive) à mémoire flash, le procédé comprenant :
une étape de suivi d'une fréquence de transfert consistant à suivre, par un logiciel installé dans un système informatique, une fréquence de transfert à laquelle sont transférées une pluralité de pages sur lesquelles sont écrites des données, à partir d'un certain bloc (Bloc 1) à un autre bloc (Bloc 2, Bloc 3) par des collectes de déchets (GC), respectivement, à partir d'un moment de création initiale à un moment d'invalidité auquel les données sont effacées ou écrasées dans le SSD à mémoire flash ; et
une étape de formation d'un groupe de classification consistant à regrouper, par le logiciel, une ou plusieurs pages ayant la même fréquence de transfert parmi la pluralité de pages dans un ou plusieurs blocs (Bloc 1, Bloc 2, Bloc 3) pour former un groupe de classification ;
**caractérisé en ce que**,
la fréquence de transfert est stockée dans une unité hors bande (OOB), qui est un espace supplémentaire prévu sur un côté d'une pluralité de pages, tout en transférant simultanément la pluralité de pages à partir d'un certain bloc (Bloc 1) vers un autre bloc (Bloc 2, Bloc 3) par des collectes de déchets (GCs).

2. Procédé selon la revendication 1, dans lequel, à l'étape de formation d'un groupe de classification, lorsque l'unité OOB est basée sur des unités de n bits, 2n groupes de classification sont formés, et les données écrites sur une ou plusieurs pages ayant une fréquence de transfert supérieure à 2n-1 sont classées comme données froides qui sont moins susceptibles de devenir invalides, et
où n est un entier positif.

3. Procédé selon la revendication 1 ou 2, comprenant en outre :
une étape de classification de données consistant à classer, par le logiciel, des données écrites sur la pluralité de pages en fonction de la fréquence de transfert.

4. Procédé selon la revendication 3, dans lequel la fréquence de transfert est de 0 au moment de création initiale, et est incrémentée de 1 chaque fois qu'un certain bloc (Bloc 1) est transféré vers un autre bloc (Bloc 2, Bloc 3) par des collectes de déchets (GC), et
dans lequel, à l'étape de classification de données, les données écrites sur une ou plusieurs pages ayant une fréquence de transfert de 0 sont classées comme données chaudes qui sont les plus susceptibles de devenir invalides, et des données écrites sur une ou plusieurs pages ayant la fréquence de transfert la plus élevée sont classées comme données froides qui sont les moins susceptibles de devenir invalides.
